# EUROPEAN PATENT APPLICATION

(11) **EP 1 969 954 A1**
(43) Date of publication of application: **17.09.2008**
(21) Application number: 07002143.1
(22) Date of filing: 01.02.2007
(51) Int. Cl.: A23L 1/39, A23L 1/40, A23L 1/48

(54) **Sauce containing (-)-epigallocatechin gallate**

(71) Applicant: DSM IP Assets B.V., 6411 TE Heerlen (NL)
(72) Inventor: The designation of the inventor has not yet been filed
(74) Representative: Rabanus, Birgit

(57) **Abstract**

Sauce containing (-)-epigallocatechin gallate and/or one or more of its derivatives.

## Description

The present invention refers to a new type of sauce containing (-)-epigallocatechin gallate (EGCG), especially to a new type of pasta sauce containing (-)-epigallocatechin gallate (EGCG).

The sauce of the present invention is particularly intended to support training success and/or optimising training of humans.

Endurance or aerobic exercise consists of performing low- to medium-intensity exercise for long periods of time, e.g. jogging or running several miles to dozens of miles; cycling several miles to dozens of miles; swimming hundreds of yards to a few miles and so on, i.e. aerobic exercise is typically performed at moderate levels of intensity for extended periods of time at a (slightly) increased heart rate.

Aerobic literally means "with oxygen", and refers to the use of oxygen in muscles' energy-generating process. In aerobic exercise oxygen is used to "burn" fats and glucose in order to produce adenosine triphosphate, the basic energy carrier for all cells. At the beginning of the exercise glycogen is used to produce glucose, but in its absence, fat metabolism is initiated instead. The latter is a slow process which is accompanied by a decline in performance level.

Accordingly, besides workout and exercise design itself also nutritional intake can maximize training success and boost sports performance. Sportsmen and athletes especially need to carefully plan the pre-competition eating to prevent any distracting symptoms of hunger and to maintain energy stores during competition. A pre-event meal should include foods that are high in carbohydrates and easy to digest. These include foods such as pasta, rice, fruits, breads, energy bars and drinks.

Carbohydrates are one of the main dietary components, especially for sportsmen and athletes. The primary function of carbohydrates is to provide energy for the body. Carbohydrates help increase stored energy (glycogen) in the muscles. Depleted glycogen stores during physical exercise can result in the so-called "hitting the wall". When this occurs, the organism begins to rely on anaerobic metabolism for the needed energy. This is much more difficult and happens at a much slower rate of conversion.

It was therefore an object of the following invention to provide a new food preparation which on the one hand helps to provide the body with energy and on the other hand is intended to support training success of humans.

It has surprisingly been found that the object of the present invention is achieved by a sauce containing (-)-epigallocatechin gallate and/or one or more of its derivatives.

The term "EGCG" as used herein denotes (-)-epigallocatechin gallate and/or one or more of its derivatives (e. g. esterified forms, glycosides, sulphates) thereof. Especially preferred is (-)-epigallocatechin gallate itself.

According to the present invention it can be advantageous to use naturally occurring sources (one ore more components) containing containing EGCG, for example green tea and/or green tea extracts, e.g. aqueous green tea extracts containing EGCG and the like. According to the present invention it may also be advantageous to use synthetically manufactured EGCG.

In preferred embodiments of the present invention the used EGCG has a high purity, e.g. a purity of at least 80 %, preferably of at least 85 %, more preferably of at least 90 %, even more preferably of at least 92 %, most preferably of at least 94 %.

According to the present invention it is advantageous if the amount of (-)-epigallocatechin gallate and/or one or more of its derivatives in 100 ml sauce (approx. 1 serving) is in the range of from 1 mg to 500 mg, preferably from 10 mg to 200 mg, most preferred from 50 to 100 mg.

It was not to be forseen by the person skilled in the art that the consumption of the sauce according to the present invention would exert changes in fiber type composition of skeletal muscle similar to regular endurance exercise, even without any (endurance) exercise, whereby it was especially surprising that the number of oxidative muscle fibers was increased independent from any physical exercise, i.e. in sedentary and trained individuals similarly.

The sauce according to the present invention may preferably be a tomato sauce, i.e. a sauce which further comprises (fresh or dried) tomatoes or parts of tomatoes, tomato puree and/or tomato pulp.

In another preferred embodiment of the present invention the sauce is a (thickened) sauce of the béchamel type, e.g. a ready-to-use "white" sauce, i.e. a sauce without tomato, for example a mushroom, cheese, truffle, salmon sauce, etc.

The sauce of the present invention can be served hot or cold and may be uncooked such as e.g. a so-called pesto (e.g. *pesto alla genovese* or *pesto alla siciliana*), which contains crushed herbs and garlic. The main ingredients of *pesto alla genovese* are basil, salt, garlic, olive oil and cheese, especially pecorino cheese. *Pesto alla siciliana* is similar to the basic genoese pesto recipe with the addition of tomato and much less basil. Variants may contain other or additional ingredients like pine nuts, walnuts, cashew nuts, curd and/or ricotta cheese. Parmesan and/or other cheese may be used instead of the pecorino cheese. Also other oils may be used. According to the present invention all green (original) or red (with (e.g. sun-dried) tomatoes and/or red bell peppers) varieties of pesto may be used.

The sauce of the present invention may also be a sauce base composition to which upon its use water can or has to be added in an amount depending on the desired viscosity of the final sauce. The sauce base composition can be prepared as a dry, powder product which is to be mixed with water, as a concentrate to which water has to be added, or as a base sauce to which no water needs to be added.

In a preferred embodiment of the present invention the sauce is a pasta sauce. The term "pasta sauce" as used herein denotes to a sauce which is usually consumed together with pasta and/or rice.

If the sauce is prepared in form of a pasta sauce it preferably further contains oil (preferably olive oil), salt and optionally sugar, one or more finely chopped vegetables (e.g. onion, carrot, celery, leek, pumpkin), meat (e.g. beef, pork, turkey and/or minced meat) and/or fish (e.g. salmon).

The sauce according to the present invention can further contain ingredients which improve the quality and similarity to a high quality home cooked sauce. For, example, taste and flavor improving ingredients such as spices, or taste components such as sodium lactate, sodium succinate, citric acid, sodium or potassium tartrate, sodium acetate and the like can be present in suitable amounts. Furthermore, stabilizer such as lecithin and/or monoglyceride may be present, preferably in an amount between 0.005 and 2 wt.-% based on the total weight of the composition.

Further ingredients of the sauce according to the present invention may be one or more hydrocolloid binding materials, such as starch materials (unmodified, modified and hydrolysed starch and mixtures thereof), guar gum, carrageenan, agar, xanthan, pectin, locust bean gum, sodium carboxymethyl cellulose and the like, preferably in an amount between 1 and 15 wt.-%, more preferably between 4 and 10 wt.-% based on the total weight of the composition.

In a preferred embodiment of the present invention the sauce is consumed together with (side) dishes that are high in carbohydrate, such as pasta, rice, cereals, chickpeas, fava beans, bread, gruel and the like.

Preferred is the consumption of the sauce of the present invention on a regular (preferred daily) basis and/or in due time (e.g. several days up to weeks) before the beginning of the exercise or before a competition, match, tournament and the like. It is according to the present invention particularly preferred to consume a sufficient amount of the sauce in order to administer an effective dose of EGCG, whereas the effective dose of EGCG varies from 0.1 to 30 mg per kg body weight per day, preferably from 1.4 to 8.5 mg per kg body weight per day, more preferably from 2 to 4.5 mg per kg body weight per day, most preferably from 4.0 to 4.5 mg per kg body weight per day, preferably together with a sufficient amount of a (side) dish that is high in carbohydrate to provide energy for the body.

According to the present invention it is also advantageous to provide a ready-to-serve meal (convenience food) which contains the sauce of the present invention together with a (side) dish that is high in carbohydrate, whereby the two components may be contained together or separately, but are preferably joined together in a unitary sales package.

The ready-to-serve meal of the present invention may also be in the form of a soup or stew, i.e. in the form of a savory (also called *umami*) liquid food that is made by combining ingredients, such as the sauce of the invention (e.g. containing meat, vegetables and so on), pasta, rice cereals, chickpeas, fava beans, bread, gruel and/or the like in stock or hot water, forming a broth, whereby soups usually are more liquid and stews are thicker, containing more solid ingredients.

The invention is further illustrated by the following example.

### Example:

**Tomato sauce:**

| | |
|---|---|
| **Ingredient** | **parts** |
| Tomato pulp | 510 |
| Carrots | 200 |
| Onions | 90 |
| Tomato concentrate | 64 |
| Olive oil | 60 |
| Celery | 45 |
| Salt | 15 |
| Sugar | 15 |
| EGCG as TEAVIGO^{™} | 1 |

| | |
|---|---|
| TEAVIGO^{™}: Tradeproduct of DSM Nutritional Products | |

## Claims

1. Sauce containing (-)-epigallocatechin gallate and/or one or more of its derivatives.

2. Sauce according to claim 1, **characterized in that** (-)-epigallocatechin gallate itself is used.

3. Sauce according to any of the preceding claims, **characterized in that** the amount of (-)-epigallocatechin gallate and/or one or more of its derivatives in 100 ml sauce (approx. 1 serving) is in the range of from 1 mg to 500 mg.

4. Sauce according to any of the preceding claims, **characterized in that** the amount of (-)-epigallocatechin gallate and/or one or more of its derivatives in 100 ml sauce is in the range of from 10 mg to 200 mg.

5. Sauce according to any of the preceding claims, **characterized in that** the amount of (-)-epigallocatechin gallate and/or one or more of its derivatives in 100 ml sauce is in the range of from 50 to 100 mg.

6. Sauce according to any of the preceding claims, **characterized in that** it further comprises oil, salt and sugar.

7. Sauce according to any of the preceding claims, **characterized in that** it further comprises (fresh or dried) tomatoes or parts of tomatoes, tomato puree and/or tomato pulp.

8. Sauce according to any of the preceding claims, **characterized in that** it is a sauce base composition to which upon its use water can or has to be added in an amount depending on the desired viscosity of the final sauce.

9. Sauce according to claim 5, **characterized in that** the sauce base composition is prepared as a dry, powder product which is to be mixed with water or as a concentrate to which water has to be added.

10. Method of supporting training success and/or optimising training of humans **characterized in that** a sauce containing (-)-epigallocatechin gallate and/or one or more of its derivatives is consumed together with a (side) dish that is high in carbohydrate.

11. Method according to claim 10, **characterized in that** the side dish is selected from pasta and rice.

12. Method according to any of the claims 10 or 11, **characterized in that** consumption is carried out on a regular (preferred daily) basis.

13. Ready-to-serve meal (convenience food) which contains the sauce according to any of the claims 1 to 9 together with a (side) dish that is high in carbohydrate.
